(19) Europäisches Patentamt
European Patent Office
Office européen des brevets

(11) EP 4 656 644 A1

(12) EUROPEAN PATENT APPLICATION
published in accordance with Art. 153(4) EPC

(43) Date of publication:
**03.12.2025 Bulletin 2025/49**

(21) Application number: **24894406.8**

(22) Date of filing: **25.10.2024**

(51) International Patent Classification (IPC):
***C07F 7/18*** *(2006.01)* ***C08C 19/25*** *(2006.01)*
***C08C 19/22*** *(2006.01)*

(52) Cooperative Patent Classification (CPC):
**C07F 7/18; C08C 19/22; C08C 19/25**

(86) International application number:
**PCT/KR2024/016484**

(87) International publication number:
**WO 2025/110512 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023 KR 20230161545**

(71) Applicant: **LG CHEM, LTD.**
**Seoul 07336 (KR)**

(72) Inventors:
- **LEE, Ju Yeol**
  **Daejeon 34122 (KR)**
- **JANG, Jae Kwon**
  **Daejeon 34122 (KR)**
- **PARK, Do Young**
  **Daejeon 34122 (KR)**
- **KIM, Yong Jae**
  **Daejeon 34122 (KR)**
- **LEE, Tae Hee**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) NOVEL COMPOUND AND METHOD FOR PREPARING SAME

(57) The present invention provides a novel compound, which is a modifier material useful for modifying rubber, especially a polymer including a repeating unit derived from a conjugated diene-based monomer, and a method for producing the same.

EP 4 656 644 A1

## Description

### [Technical Field]

CROSS-REFERENCE TO RELATED APPLICATION

This application claims the benefit of priority to Korean Patent Application No. 10-2023-0161545 filed on November 20, 2023, the disclosure of which is incorporated herein by reference in its entirety.

Technical Field

The present invention relates to a novel compound capable of highly modifying rubber and a method for producing the same.

### [Background Art]

Recently, as fuel efficiency of automobiles is demanded, a conjugated diene-based polymer having low running resistance, excellent wear resistance and tensile properties, and also having steering stability represented by wet road surface resistance is required as a rubber material for tires.

In order to reduce the running resistance of tires, there is a way to reduce the hysteresis loss of vulcanized rubber, and as evaluation indices of such vulcanized rubber, rebound resilience at 50°C to 80°C, tan δ, Goodrich heat generation, etc. are used. That is, a rubber material having high rebound resilience at the above temperature or low tan δ and goodrich heat generation is preferable.

Natural rubber, polyisoprene rubber, or polybutadiene rubber are known as rubber materials with a small hysteresis loss, but they have a problem of low wet road surface resistance. Recently, conjugated diene-based polymers or copolymers such as styrene-butadiene rubber (hereinafter referred to as SBR) or butadiene rubber (hereinafter referred to as BR) have been produced by emulsion polymerization or solution polymerization and used as rubber for tires. The greatest advantage of solution polymerization over emulsion polymerization among them is that the vinyl structure content and styrene content, which define the rubber properties, can be arbitrarily adjusted, and the molecular weight and properties can be adjusted by coupling, modification, or the like. Therefore, the structure of the finally produced SBR or BR can be easily changed, and the movement of the chain end can be reduced by bonding or modification of the chain end, and the bonding strength with fillers such as silica or carbon black can be increased, so that SBR by solution polymerization is widely used as a rubber material for tires.

The solution polymerized SBR is produced using an anionic polymerization initiator, and a technology is being used to bond or modify the chain end of the formed polymer using various modifiers to introduce a functional group to the end.

### [Prior Art Literature]

### [Patent Documents]

(Patent Document 1) KR 1994-0021564 A (October 19, 1994)

### [Disclosure]

### [Technical Problem]

The present invention has been devised to solve the problems of the prior art as mentioned above, and aims to provide a novel compound useful as a rubber modifier capable of increasing an affinity between rubber and filler.

In addition, the present invention aims to provide a method for producing the above compound.

### [Technical Solution]

According to one embodiment of the present invention for solving the above-mentioned problems, the present invention provides a novel compound and a method for producing the same.

(1) The present invention provides a compound represented by Chemical Formula 1 below:

[Chemical Formula 1]

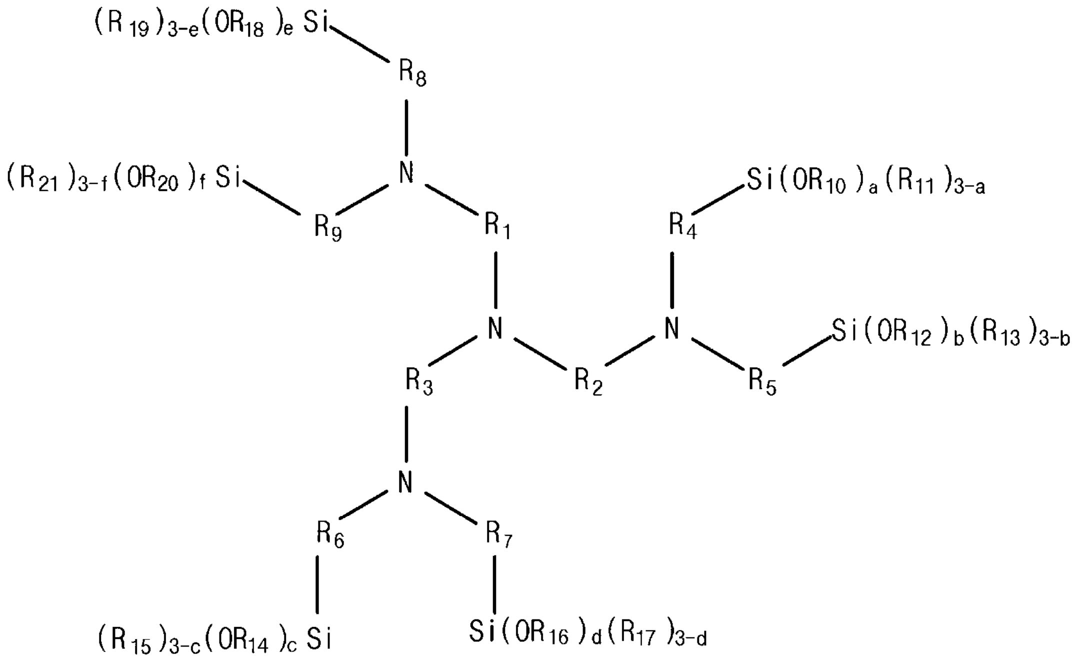

wherein in Chemical Formula 1 above, $R_1$ to $R_9$ are each independently an alkylene group having 1 to 20 carbon atoms, $R_{10}$ to $R_{21}$ are each independently an alkyl group having 1 to 20 carbon atoms, and a, b, c, d, e, and f are each independently an integer selected from 1 to 3.

(2) The present invention provides the compound according to (1) above, wherein in Chemical Formula 1 above, $R_1$ to $R_9$ are each independently an alkylene group having 1 to 10 carbon atoms, $R_{10}$ to $R_{21}$ are each independently an alkyl group having 1 to 10 carbon atoms, and a, b, c, d, e, and f are each independently an integer selected from 1 to 3.

(3) The present invention provides the compound according to (1) or (2) above, wherein in Chemical Formula 1 above, $R_1$ to $R_9$ are each independently an alkylene group having 1 to 6 carbon atoms, $R_{10}$ to $R_{21}$ are each independently an alkyl group having 1 to 6 carbon atoms, and a, b, c, d, e, and f are each independently an integer selected from 1 to 3.

(4) The present invention provides the compound according to any one of (1) to (3) above, wherein the compound represented by Chemical Formula 1 is a compound represented by Chemical Formulae 1-1 or Chemical Formulae 1-2 below:

[Chemical Formula 1-1]

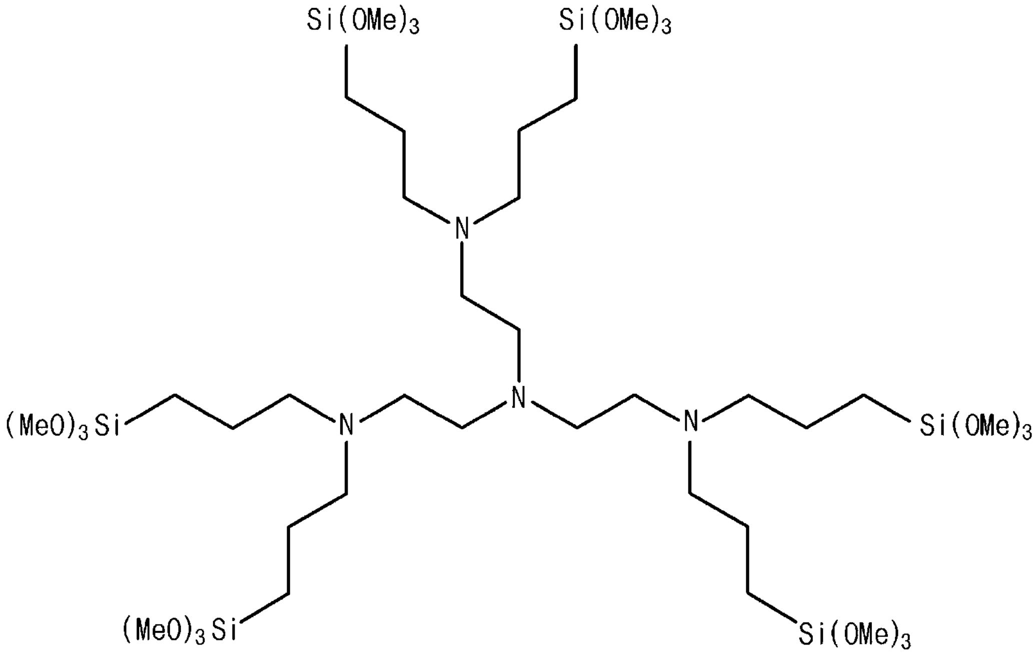

[Chemical Formula 1-2]

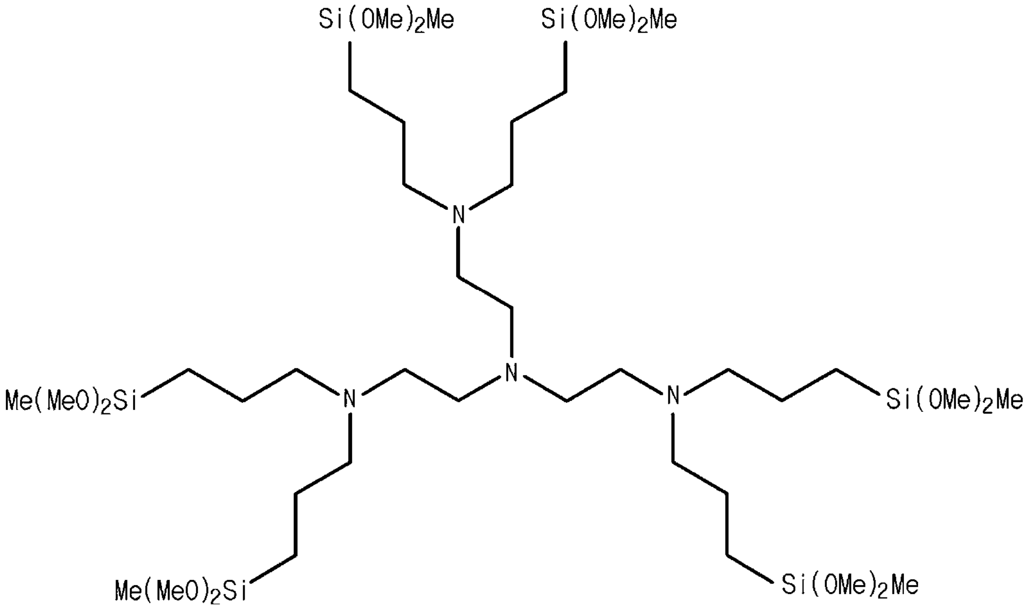

wherein Me is a methyl group.

(5) The present invention provides the compound according to any one of (1) to (4) above, wherein the compound is a modifier for modifying rubber.

(6) The present invention provides the compound according to any one of (1) to (5) above, wherein the compound is a modifier for modifying a polymer comprising a repeating unit derived from a conjugated diene-based monomer.

(7) The present invention provides a method for producing a compound represented by Chemical Formula 1 in any one of (1) to (6) above, the method including a step of reacting a compound represented by Chemical Formula 2 below with a compound represented by Chemical Formula 3 below:

[Chemical Formula 2]

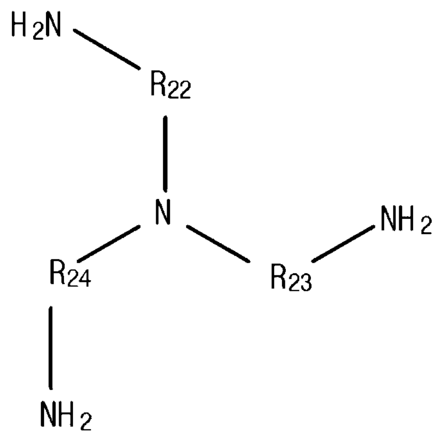

wherein:

$R_{22}$ to $R_{24}$ are each independently an alkylene group having 1 to 20 carbon atoms,

[Chemical Formula 3]

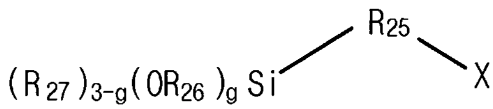

wherein:

$R_{25}$ is an alkylene group having 1 to 20 carbon atoms,
$R_{26}$ and $R_{27}$ are each independently an alkyl group having 1 to 20 carbon atoms,
X is a halogen element, and
g is an integer selected from 1 to 3,

[Chemical Formula 1]

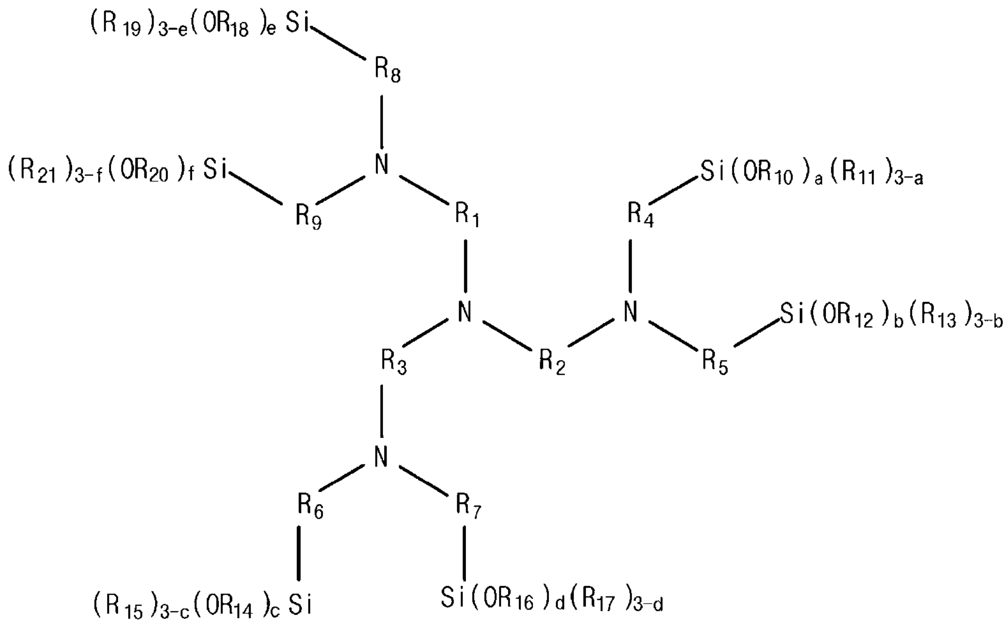

wherein:

$R_1$ to $R_9$ are each independently an alkylene group having 1 to 20 carbon atoms,
$R_{10}$ to $R_{21}$ are each independently an alkyl group having 1 to 20 carbon atoms, and
[49] a, b, c, d, e, and f are each independently an integer selected from 1 to 3.

(8) The present invention provides the method for producing the compound according to (7) above, wherein in Chemical Formula 1 above, $R_1$ to $R_9$ are each independently an alkylene group having 1 to 10 carbon atoms, $R_{10}$ to $R_{21}$ are each independently an alkyl group having 1 to 10 carbon atoms, and a, b, c, d, e, and f are each independently an integer selected from 1 to 3.
(9) The present invention provides the method for producing the compound according to (7) or (8) above, wherein in Chemical Formula 2, $R_{22}$ to $R_{24}$ are each independently an alkylene group having 1 to 10 carbon atoms.
(10) The present invention provides the method for producing the compound according to any one of (7) to (9) above, wherein in Chemical Formula 3 above, $R_{25}$ is an alkylene group having 1 to 10 carbon atoms, $R_{26}$ and $R_{27}$ are each independently an alkyl group having 1 to 10 carbon atoms, X is a halogen element, and g is an integer selected from 1 to 3.
(11) The present invention provides the method for producing the compound according any one of (7) to (10) above, wherein the reaction is performed in a reaction solvent under basic conditions at a temperature of 60°C to 120°C.
(12) The present invention provides the method for producing the compound according any one of (7) to (11) above, wherein the compound represented by Chemical Formula 2 and the compound represented by Chemical Formula 3 are reacted in a molar ratio of 1:6 to 8.

**[Advantageous Effects]**

The compound according to the present invention can be applied to the modification reaction of rubber, especially a polymer including a repeating unit derived from a conjugated diene-based monomer, to modify the polymer at a high modification rate, thereby exhibiting an effect of maximizing the affinity with a filler.

**[Best Modes of the Invention]**

Hereinafter, the present invention will be described in more detail to help understand the present invention.
The terms or words used in the description and claims of the present invention should not be construed as being

limited to their ordinary or dictionary meanings, but should be interpreted as meanings and concepts consistent with the technical spirit of the present invention, based on the principle that the inventor may adequately define the concepts of terms to best describe his invention.

## Definition of terms

The term 'polymer' used herein refers to a polymer compound produced by polymerizing monomers, regardless of whether they are of the same or different kinds. Thus, the general term 'polymer' encompasses the term 'homopolymer', which is commonly used to refer to a polymer produced from one monomer, and the term 'copolymer' as defined below.

The term 'copolymer' used herein refers to a polymer produced by polymerization of at least two different monomers. Thus, the general term 'copolymer' includes a binary copolymer, which is commonly used to refer to a polymer produced from two different monomers, and a polymer produced from more than two different monomers.

The term '1,2-vinyl bond content' used herein refers to the mass (or weight) percentage of butadiene contained in the 1,2-position in the polymer chain of the polymer based on the portion derived from a conjugated diene-based monomer (such as butadiene) in the polymer (total amount of polymerized butadiene).

The term 'styrene bond content' used herein refers to the mass (or weight) percentage of styrene contained in the polymer chain of the polymer derived from an aromatic vinyl-based monomer (such as styrene) among the polymers.

The term 'room temperature' used herein refers to a temperature as it is in a natural state without heating or cooling, and is a temperature of 20±5°C.

The term 'substitution' used herein may mean that a hydrogen of a functional group, atomic group, or compound is substituted with a specific substituent, and when a hydrogen of a functional group, atomic group, or compound is substituted with a specific substituent, one or more substituents may exist depending on the number of hydrogens present in the functional group, atomic group, or compound, wherein when a plurality of substituents exist, each of the substituents may be the same or different from each other.

The term 'alkyl group' used herein may refer to a monovalent aliphatic saturated hydrocarbon, and may include linear alkyl groups such as methyl, ethyl, propyl, and butyl; branched alkyl groups such as isopropyl, sec-butyl, tert-butyl and neopentyl; and cyclic saturated hydrocarbons, or cyclic unsaturated hydrocarbons containing one or more unsaturated bonds.

The term 'alkylene group' used herein may refer to a divalent aliphatic saturated hydrocarbon such as methylene, ethylene, propylene, and butylene.

The terms 'derived unit,' 'derived repeating unit,' and 'derived functional group' as used herein may refer to a component, structure, or substance itself derived from a substance.

The terms 'comprising,' 'having,' and their derivatives as used herein are not intended to exclude the presence of any additional component, step, or procedure, whether or not specifically disclosed. In order to avoid any uncertainty, all compositions claimed through use of the term "comprising" may include any additional additive, adjuvant, or compound, whether polymeric or otherwise, unless stated to the contrary. In contrast, the term "consisting essentially of" excludes any other component, step, or procedure from the scope of any subsequent description, except those that are notessential to operability. The term "consisting of" excludes any component, step, or procedure not specifically described or enumerated.

## Measurement methods and conditions

The 'weight average molecular weight (Mw)' and 'molecular weight distribution (MWD)' used herein were obtained by measuring the weight average molecular weight (Mw) and number average molecular weight (Mn) using gel permeation chromatograph (GPC) (PL GPC220, Agilent Technologies) under the following conditions, and obtaining the molecular weight distribution curves, and the molecular weight distribution (PDI, MWD, Mw/Mn) was obtained by calculating from each of the measured molecular weights.

Column: Two PLgel Olexis (Polymer Laboratories) columns and one PLgel mixed-C (Polymer Laboratories) column were used in combination
Solvent: 2 wt% amine compound mixed in tetrahydrofuran was used
Flow rate: 1 ml/min
Sample concentration: 1~2 mg/ml (diluted in THF)
Injection amount: 100 μL
Column temperature: 40°C
Detector: Refractive index
Standard: Polystyrene (calibrated with a third order function)

**Novel compound**

The present invention provides a novel modifier compound capable of modifying rubber, especially a polymer including a repeating unit derived from a conjugated diene-based monomer, to provide a modified polymer having a high modification rate and high affinity with a filler.

The novel modifier compound according to one embodiment of the present invention is characterized by being a compound represented by Chemical Formula 1 below:

[Chemical Formula 1]

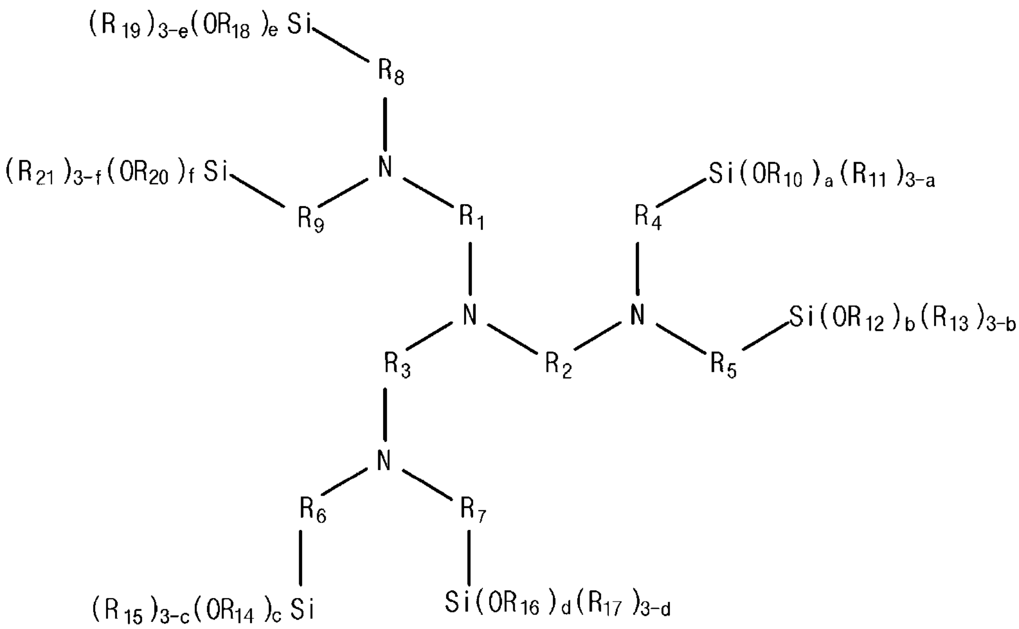

wherein:

$R_1$ to $R_9$ are each independently an alkylene group having 1 to 20 carbon atoms,
$R_{10}$ to $R_{21}$ are each independently an alkyl group having 1 to 20 carbon atoms, and
a, b, c, d, e, and f are each independently an integer selected from 1 to 3.

Specifically, in Chemical Formula 1 above, $R_1$ to $R_9$ may each independently be an alkylene group having 1 to 10 carbon atoms, $R_{10}$ to $R_{21}$ may each independently be an alkyl group having 1 to 10 carbon atoms, and a, b, c, d, e, and f may each independently be an integer selected from 1 to 3.

More specifically, in Chemical Formula 1 above, $R_1$ to $R_9$ may each independently be an alkylene group having 1 to 6 carbon atoms, $R_{10}$ to $R_{21}$ may each independently be an alkyl group having 1 to 6 carbon atoms, and a, b, c, d, e, and f may each independently be an integer selected from 1 to 3.

Still more specifically, the compound represented by Chemical Formula 1 may be a compound represented by Chemical Formula 1-1 or Chemical Formula 1-2 below:

[Chemical Formula 1-1]

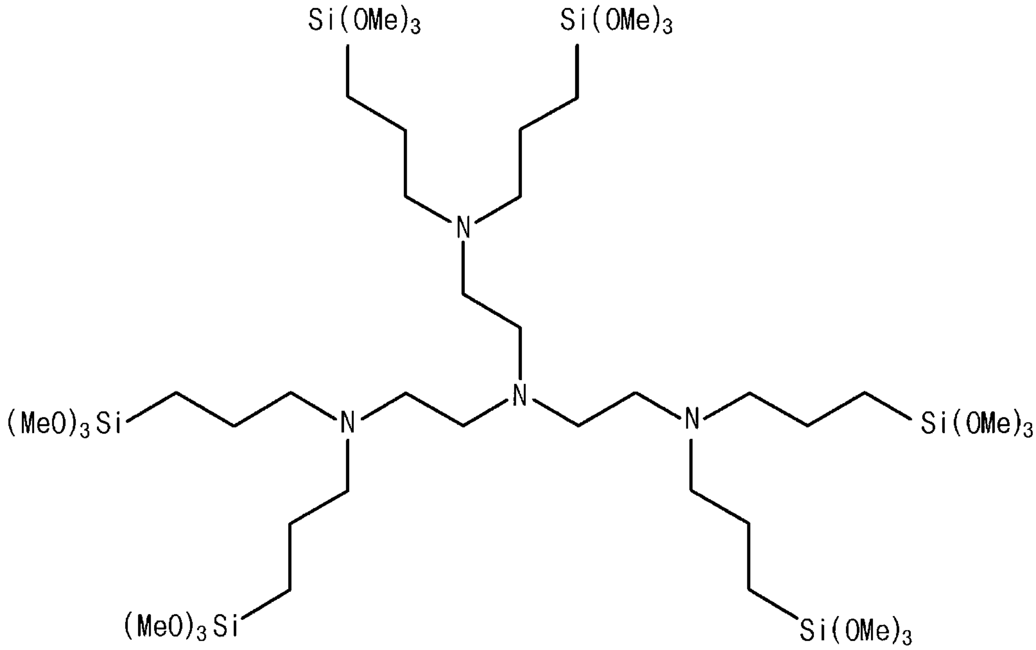

[Chemical Formula 1-2]

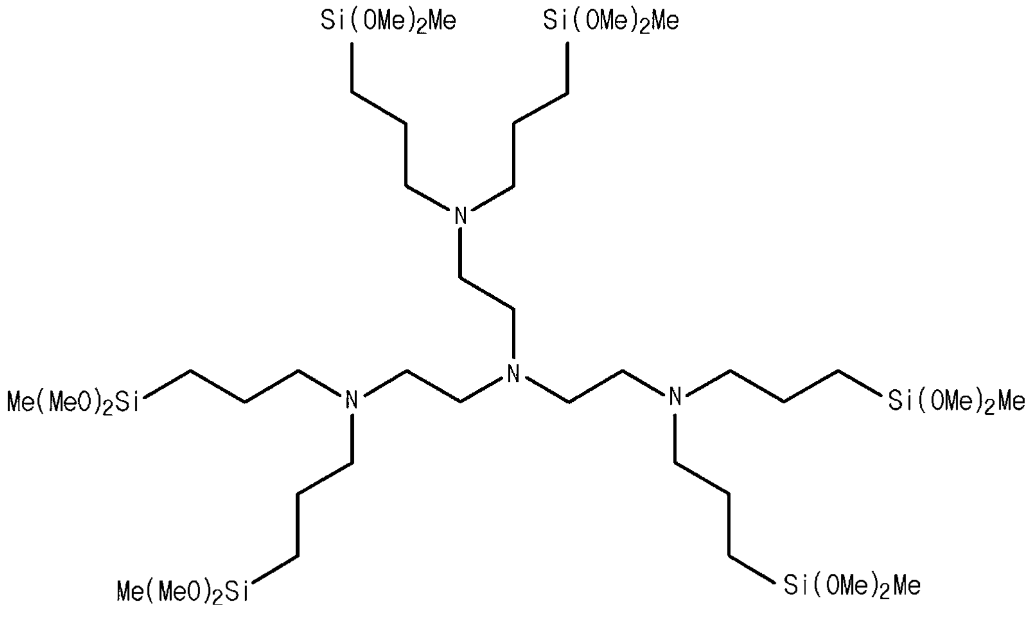

wherein Me is a methyl group.

In addition, the compound represented by Chemical Formula 1 may be a modifier for modifying rubber, and specifically, may be a modifier for modifying a polymer including a repeating unit derived from a conjugated diene-based monomer, wherein the polymer may be a homopolymer including a repeating unit derived from a conjugated diene-based monomer, and a copolymer including a repeating unit derived from the conjugated diene-based monomer and a repeating unit derived from other monomers.

Meanwhile, the compound represented by Chemical Formula 1 according to the present invention can be applied to a rubber modification reaction, i.e., as a modifier for modifying the rubber, thereby providing a plurality of coupling sites to

increase the coupling rate between chains constituting the rubber, while simultaneously being introduced into the chain and modifying the chain structure to highly modify the rubber, and thus greatly increasing the affinity with a filler compared to conventional modifier materials.

In addition, the nitrogen in the compound represented by Chemical Formula 1 can play a role in increasing the affinity between the rubber modified from the compound represented by Chemical Formula 1 and the filler, and the compound represented by Chemical Formula 1 includes a plurality of coupling sites, so that the residual coupling sites (-Si-OR, alkoxy group) that have not reacted with the chain constituting the rubber after the rubber modification can form a plurality of covalent bonds with the filler, thereby forming a strong bond.

**Method for producing the compound**

The present invention provides a method for producing a novel compound represented by Chemical Formula 1 above.

The method for producing the compound according to one embodiment of the present invention is characterized by including a step of reacting a compound represented by Chemical Formula 2 below and a compound represented by Chemical Formula 3 below:

[Chemical Formula 2]

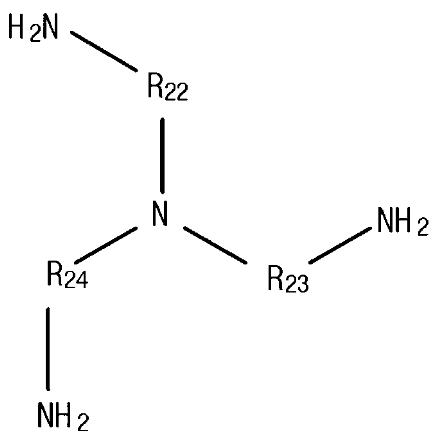

wherein:

$R_{22}$ to $R_{24}$ are each independently an alkylene group having 1 to 20 carbon atoms,

[Chemical Formula 3]

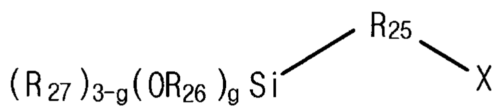

wherein:

$R_{25}$ is an alkylene group having 1 to 20 carbon atoms,
$R_{26}$ and $R_{27}$ are each independently an alkyl group having 1 to 20 carbon atoms,
X is a halogen element, and
g is an integer selected from 1 to 3,

[Chemical Formula 1]

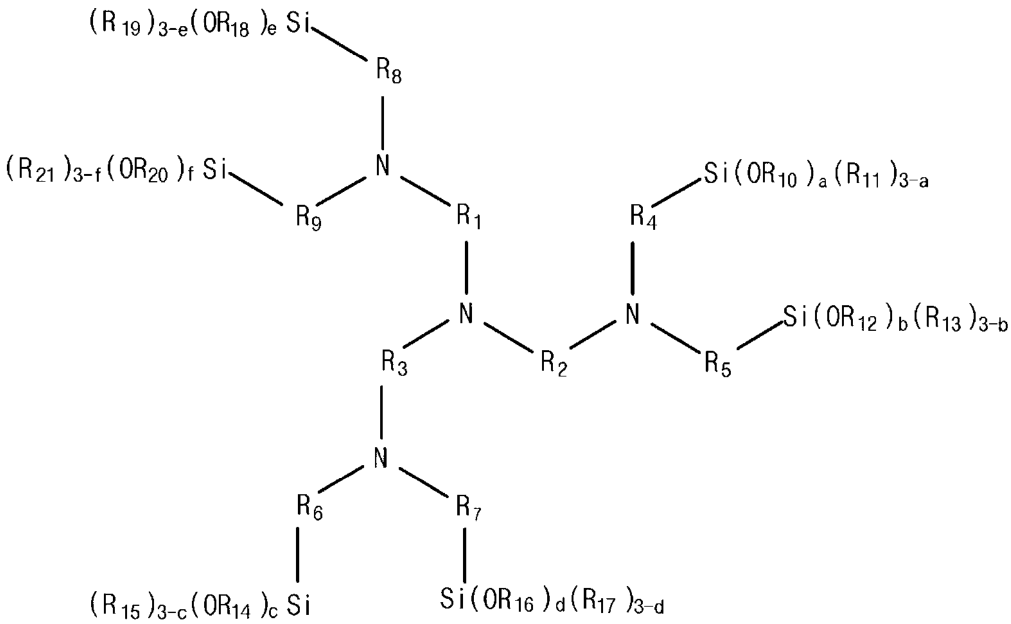

wherein:

- $R_1$ to $R_9$ are each independently an alkylene group having 1 to 20 carbon atoms,
- $R_{10}$ to $R_{21}$ are each independently an alkyl group having 1 to 20 carbon atoms, and
- a, b, c, d, e, and f are each independently an integer selected from 1 to 3.

The above reaction may be performed in a reaction solvent under basic conditions at a temperature of 60°C to 120°C.

The above basic condition may be formed using a base compound, wherein the base compound is not particularly limited as long as it is a tertiary amine compound commonly used in the art, but may be, for example, triethylamine, diisopropylamine, or a mixture thereof.

In addition, the reaction may further use potassium iodide (KI), potassium bromide (KBr), or a mixture thereof, which acts as a catalyst, if necessary, and in this case, it can be advantageous to achieve a smoother desired reaction by increasing the reaction activity and improving the reaction rate. In addition, the compound represented by Chemical Formula 2 above and the compound represented by Chemical Formula 3 above may be reacted at an appropriate ratio according to the stoichiometric ratio, but specifically, may be reacted at a molar ratio of 1:6 to 8. In this case, the reaction rate can be improved without excessive residual substances.

In addition, in Chemical Formula 2 above, $R_{22}$ to $R_{24}$ are each independently an alkylene group having 1 to 10 carbon atoms.

Specifically, in Chemical Formula 2 above, $R_{22}$ to $R_{24}$ are each independently an alkylene group having 1 to 6 carbon atoms.

In addition, in Chemical Formula 3 above, $R_{25}$ may be an alkylene group having 1 to 10 carbon atoms, $R_{26}$ and $R_{27}$ may each independently be an alkyl group having 1 to 10 carbon atoms, X may be a halogen element, and g may be an integer selected from 1 to 3. Here, the halogen element may be Cl, Br, I or F.

Specifically, in Chemical Formula 3 above, $R_{25}$ may be an alkylene group having 1 to 6 carbon atoms, $R_{26}$ and $R_{27}$ may each independently be an alkyl group having 1 to 6 carbon atoms, X may be Cl, and g may be an integer selected from 1 to 3.

In the compound represented by the Chemical Formula 1 produced from the above, specifically, in Chemical Formula 1 above, $R_1$ to $R_9$ may each independently be an alkylene group having 1 to 10 carbon atoms, $R_{10}$ to $R_{21}$ may each independently be an alkyl group having 1 to 10 carbon atoms, and a, b, c, d, e, and f may each independently be an integer selected from 1 to 3.

In addition, in Chemical Formula 1 above, $R_1$ to $R_9$ may each independently be an alkylene group having 1 to 6

carbon atoms, $R_{10}$ to $R_{21}$ may each independently be an alkyl group having 1 to 6 carbon atoms, and a, b, c, d, e, and f may each independently be an integer selected from 1 to 3.

## Modified conjugated diene-based polymer

The present invention provides a modified conjugated diene-based polymer modified with a compound represented by Chemical Formula 1 above.

The modified conjugated diene-based polymer according to one embodiment of the present invention is characterized by including a repeating unit derived from a conjugated diene-based monomer and a unit derived from a compound represented by Chemical Formula 1 above.

Here, since the compound represented by Chemical Formula 1 above is as described above, a detailed description thereof is omitted.

The modified conjugated diene-based polymer has a repeating unit derived from a conjugated diene-based monomer as the main unit thereof, wherein the conjugated diene-based monomer may be, for example, at least one selected from the group consisting of 1,3-butadiene, 2,3-dimethyl-1,3-butadiene, piperylene, 3-butyl-1,3-octadiene, isoprene, 2-phenyl-1,3-butadiene, and 2-halo-1,3-butadiene (wherein halo means a halogen element).

In addition, the modified conjugated diene-based polymer may further include a repeating unit derived from an aromatic vinyl-based monomer in addition to the conjugated diene-based monomer, wherein the aromatic vinyl-based monomer may be, for example, at least one selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene, and 3-(2-pyrrolidino-1-methylethyl)-$\alpha$-methylstyrene.

As another example, the modified conjugated diene-based polymer may be a copolymer further comprising a repeating unit derived from a diene-based monomer having 1 to 10 carbon atoms together with the repeating unit derived from the conjugated diene-based monomer. The repeating unit derived from the diene-based monomer may be a repeating unit derived from a diene-based monomer different from the conjugated diene-based monomer, wherein the diene-based monomer different from the conjugated diene-based monomer may be, for example, 1,2-butadiene. When the conjugated diene-based polymer is a copolymer further comprising a diene-based monomer, the conjugated diene-based polymer may include a repeating unit derived from the diene-based monomer in an amount of more than 0 wt% to 1 wt%, more than 0 wt% to 0.1 wt%, more than 0 wt% to 0.01 wt%, or more than 0 wt% to 0.001 wt%. Within this range, there is an effect of preventing gel formation.

According to one embodiment of the present invention, when the chain of the conjugated diene-based polymer includes two or more monomers, it may have a chain structure in an intermediate form between a random copolymer and a block copolymer, and in this case, the microstructure can be easily controlled, and thus, there is an effect of excellent balance between the properties. The random copolymer may mean that the repeating units forming the copolymer are arranged randomly.

In addition, the modified conjugated diene-based polymer includes a functional group derived from a modifier, wherein the modifier is intended to modify the end of the polymer, and means a unit derived from the compound represented by Chemical Formula 1 above.

According to one embodiment of the present invention, the modified conjugated diene-based polymer may have a weight average molecular weight (Mw) of 300,000 g/mol to 3,000,000 g/mol, 400,000 g/mol to 2,500,000 g/mol, or 500,000 g/mol to 2,000,000 g/mol as measured by gel permeation chromatography (GPC). Within this range, there is an effect of more balanced and excellent running resistance and wet road surface resistance.

In addition, the modified conjugated diene-based polymer according to one embodiment of the present invention may be a high molecular weight polymer having a weight average molecular weight of 800,000 g/mol or more, preferably 1,000,000 g/mol or more, and thus can implement a polymer having excellent tensile properties, which can be achieved by implementing the effect of extending the polymer chain together with the control of the microstructure when produced according to the above-described producing method.

According to one embodiment of the present invention, the modified conjugated diene-based polymer may have a number average molecular weight (Mn) of 1,000 g/mol to 2,000,000 g/mol, 10,000 g/mol to 1,500,000 g/mol, or 100,000 g/mol to 1,200,000 g/mol, preferably 400,000 g/mol or more, more preferably 500,000 g/mol or more. In addition, the peak top molecular weight (Mp) may be 1,000 g/mol to 3,000,000 g/mol, 10,000 g/mol to 2,000,000 g/mol, or 100,000 g/mol to 2,000,000 g/mol. Within this range, there is an effect of excellent running resistance and wet road surface resistance.

In addition, the modified conjugated diene-based polymer may have a molecular weight distribution of 1.0 to 3.0, preferably 1.0 to 2.5, more preferably 1.0 to 2.0.

In addition, the modified conjugated diene-based polymer according to one embodiment of the present invention should satisfy that the Mooney viscosity measured under ASTM D1646 conditions is 40 to 120, and may be preferably 45 to 100. There may be various measures for evaluating processability, but when the Mooney viscosity satisfies the above

range, the processability may be considerably excellent.

In addition, the modified conjugated diene-based polymer may be produced by a conventional method except for modifying it with the compound represented by Chemical Formula 1. For example, it may be produced by polymerizing a conjugated diene-based monomer or a conjugated diene-based monomer and an aromatic vinyl-based monomer in the presence of a hydrocarbon solvent and a polymerization initiator to prepare an active polymer, and reacting the active polymer with the compound represented by Chemical Formula 1 above.

The hydrocarbon solvent is not particularly limited, but may be at least one selected from the group consisting of n-pentane, n-hexane, n-heptane, isooctane, cyclohexane, toluene, benzene, and xylene.

The polymerization initiator may be used in an amount of 0.1 to 3.0 equivalents, preferably 0.1 to 2.0 equivalents, more preferably 0.5 to 1.5 equivalents, based on 1.0 equivalent of the monomer. In another example, the polymerization initiator may be used in an amount of 0.01 mmol to 10 mmol, 0.05 mmol to 5 mmol, 0.1 mmol to 2 mmol, 0.1 mmol to 1 mmol, or 0.15 to 0.8 mmol, based on 100 g of the total monomer. Here, the total 100 g of the monomer may be a conjugated diene-based monomer, or may represent the sum of the conjugated diene-based monomer and the aromatic vinyl-based monomer.

Meanwhile, the polymerization initiator may be an organometallic compound, and for example, may be at least one selected from an organolithium compound, an organosodium compound, an organopotassium compound, an organorubidium compound, and an organocesium compound.

Specifically, the organometallic compound may be at least one selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3,5-di-n-heptylcyclohexyllithium, 4-cyclopentyllithium, naphthylsodium, naphthylpotassium, lithium alkoxide, sodium alkoxide, potassium alkoxide, lithium sulfonate, sodium sulfonate, potassium sulfonate, lithium amide, sodium amide, potassium amide, and lithium isopropylamide.

In addition, the polymerization may be performed by further using a polar additive, and in the case of homopolymerizing a conjugated diene-based monomer, the ratio of 1,2-bonds and 1,4-bonds can be controlled by controlling the reaction rate. In the case of copolymerizing a conjugated diene-based monomer and an aromatic vinyl-based monomer, a difference in reaction rate between the monomers may be corrected to induce a random copolymer to be easily formed.

The total amount of the polar additive used may be in a ratio of 0.001 g to 50 g, or 0.002 g to 1.0 g, relative to a total of 100 g of the monomers. As another example, the total amount of the polar additive used may be in a ratio of more than 0 g to 1 g, 0.01 g to 1 g, or 0.1 g to 0.9 g, relative to a total of 100 g of the polymerization initiators.

The polar additive may be, for example, at least one selected from the group consisting of tetrahydrofuran, 2,2-di(2-tetrahydrofuryl)propane, diethyl ether, cyclopentyl ether, dipropyl ether, ethylene methyl ether, ethylene glycol dimethyl ether, diethylene glycol, dimethyl ether, tert-butoxyethoxyethane, bis(3-dimethylaminoethyl)ether, (dimethylaminoethyl)ethyl ether, trimethylamine, triethylamine, tripropylamine, N,N,N',N'-tetramethylethylenediamine, sodium mentholate, and 2-ethyl tetrahydrofurfuryl ether, and preferably, 2,2-di(2-tetrahydrofuryl)propane, triethylamine, tetramethylethylenediamine, sodium mentholate, or 2-ethyl tetrahydrofurfuryl ether.

In addition, the active polymer may refer to a polymer in which a polymer anion and an organic metal cation of a polymerization initiator are combined.

The reaction of the active polymer and the compound represented by Chemical Formula 1 may be a reaction between an anion active site of the active polymer and an alkoxy group bonded to a silane of the compound represented by Chemical Formula 1. The compound represented by Chemical Formula 1 may be used in an amount of 0.01 mmol to 10 mmol based on a total of 100 g of the monomers. As another example, the compound represented by Chemical Formula 1 may be used in a molar ratio of 1:0.1 to 10, 1:0.1 to 5, or 1:0.1 to 3 based on 1 mol of the polymerization initiator of the step (S3).

In this case, the reaction may be a modification reaction in which the compound represented by Chemical Formula 1 is simply combined with the active polymer, or a coupling reaction in which the active polymer is connected based on the compound represented by Chemical Formula 1.

## EXAMPLES

Hereinafter, the present invention will be described in detail by way of examples. However, the examples according to the present invention may be modified in various different forms, and the scope of the present invention should not be construed as being limited to the examples described in detail below. The examples of the present invention are provided to explain the present invention more completely to those skilled in the art.

**Example 1**

2.92 g (20 mmol) of tris(2-aminoethyl)amine, 31.7 g (160 mmol) of (3-chloropropyl)trimethoxysilane, 330 mg of potassium iodide and 18.2 g of triethylamine were reacted while being stirred at a temperature of 60°C for 7 days. After the reaction was completed, the temperature was lowered to room temperature, and 50 ml of a mixture of diethyl ether and hexane (1:1 by volume) was added and stirred for 15 minutes. Then, the solid by-products were removed by a celite filter, and the solution and impurities were removed by distillation under reduced pressure to prepare a compound represented by Chemical Formula 1-1 as a light brown oil. The synthesis of the prepared compound was confirmed through $^{1}H$ NMR analysis.

[Chemical Formula 1-1]

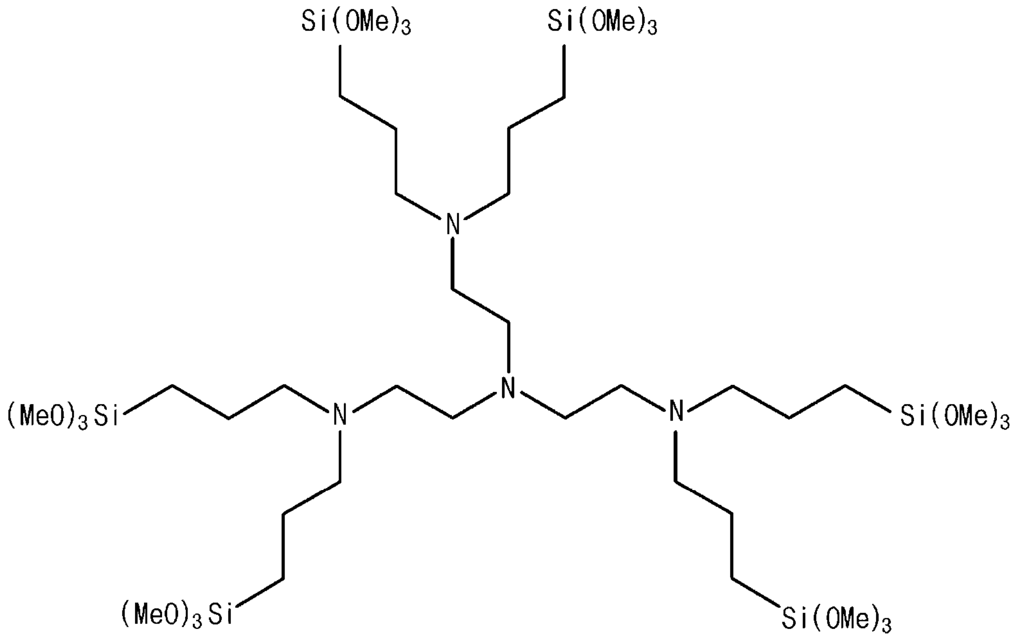

wherein Me is a methyl group.
$^{1}H$ NMR (500 MHz, $CDCl_3$) δ 3.56 (s, 54H), 2.70-2.24 (m, 24H), 1.56-1.49 (m, 12H), 0.61-0.58 (m, 12H).

**Example 2**

2.92 g (20 mmol) of tris(2-aminoethyl)amine, 29.1 g (160 mmol) of (3-chloropropyl)dimethoxysilane, 330 mg of potassium iodide and 18.2 g of triethylamine were reacted while being stirred at a temperature of 60°C for 7 days. After the reaction was completed, the temperature was lowered to room temperature, and 50 ml of a mixture of diethyl ether and hexane (1:1 by volume) was added and stirred for 15 minutes. Then, the solid by-products were removed by a celite filter, and the solution and impurities were removed by distillation under reduced pressure to prepare a compound represented by Chemical Formula 1-2 as a light brown oil. The synthesis of the prepared compound was confirmed through $^{1}H$ NMR analysis.

[Chemical Formula 1-2]

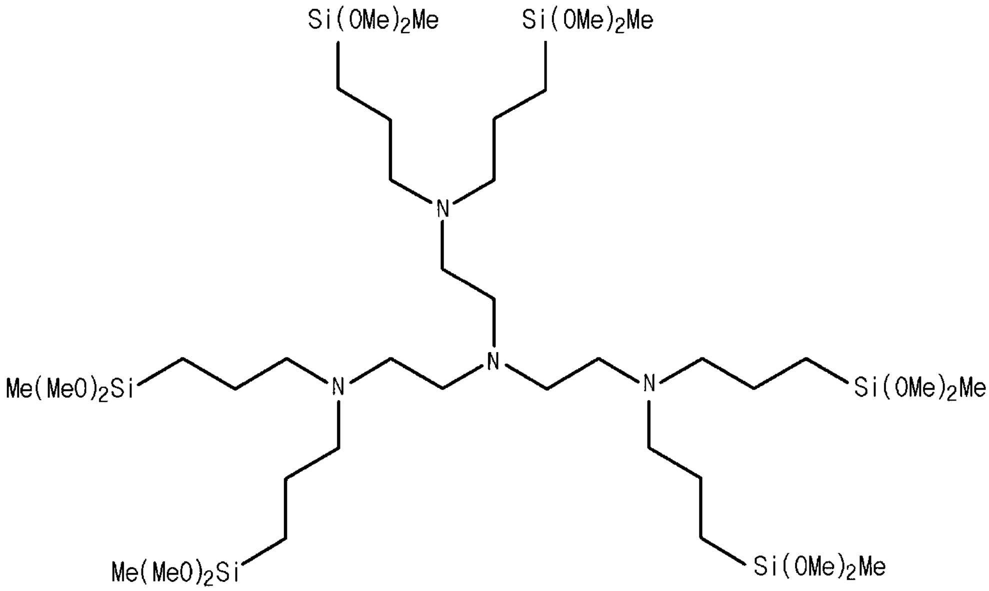

wherein Me is a methyl group.
$^1H$ NMR (500 MHz, $CDCl_3$) δ 3.37 (s, 36H), 2.47-2.25 (m, 24H), 1.73-1.67 (m, 12H), 0.43-0.41 (m, 12H), 0.02 (s, 18H).

**Example 3**

64.5 g of styrene, 235.5 g of 1,3-butadiene, 2,000 g of n-hexane, and 0.42 g of DTP (2,2-di(2-(tetrahydrofuryl) propane)) as a polar additive were added to a 10 L autoclave reactor, and the internal temperature of the reactor was adjusted to 60°C. When it reached 60°C, 0.26 g of n-butyllithium was injected into the reactor to react. After 40 minutes, 0.44 g of the compound represented by Chemical Formula 1-1 prepared in Example 1 was added and reacted for 40 minutes. Thereafter, the reaction was stopped using ethanol, an antioxidant was added to obtain a polymer, which was dried to prepare a modified styrene-butadiene copolymer.

**Example 4**

A modified styrene-butadiene copolymer was prepared in the same manner as in Example 3, except that the compound represented by Chemical Formula 1-2 prepared in Example 2 was used instead of the compound represented by Chemical Formula 1-1 in Example 3.

**Comparative Example**

A modified styrene-butadiene copolymer was prepared in the same manner as in Example 3, except that 0.08 g of 3-(trimethoxysilyl)propylamine (Sigma-Aldrich) was used instead of the compound represented by Chemical Formula 1-1 in Example 3.

**Experimental Example 1. Evaluation of Polymer Characteristics**

For each of the modified styrene-butadiene copolymers prepared in the above examples and comparative examples, the weight average molecular weight (Mw, $\times 10^3$ g/mol), maximum peak molecular weight (Mp, $\times 10^3$ g/mol), and coupling number were measured, respectively. The results were shown in Table 1 below.

1) Weight average molecular weight (Mw, $\times 10^3$ g/mol), maximum peak molecular weight (Mp, $\times 10^3$ g/mol)

The weight average molecular weight (Mw) and maximum peak molecular weight (Mp) were measured using gel

permeation chromatography (GPC) (PL GPC220, Agilent Technologies) under the following conditions, respectively. Meanwhile, a portion of the active polymer was collected, and the maximum peak molecular weight before modification was also measured.

Column: Two PLgel Olexis (Polymer Laboratories) columns and one PLgel mixed-C (Polymer Laboratories) column were used in combination
Solvent: 2 wt% amine compound mixed in tetrahydrofuran was used
Flow rate: 1 mL/min
Sample concentration: 1~2 mg/mL (diluted in THF)
Injection amount: 100 μL
Column temperature: 40°C
Detector: Refractive index
Standard: Polystyrene (calibrated with a third order function)

2) Coupling number (C.N.)

The coupling number was calculated by the following Mathematical Equation 1 from the maximum peak molecular weight before modification measured in 1) above and the maximum peak molecular weight of the finally modified polymer.

[Mathematical Equation 1]

$$\text{Coupling number} = Mp_2/Mp_1$$

wherein $Mp_1$ is the maximum peak molecular weight of the active polymer before modification, and $Mp_2$ is the maximum peak molecular weight of the finally modified polymer.

[Table 1]

| Division | | Example | | Comparative example |
|---|---|---|---|---|
| | | 3 | 4 | |
| GPC | Mw($\times 10^3$ g/mol) | 1534 | 1032 | 498 |
| | $Mp_1$($\times 10^3$ g/mol) | 192 | 176 | 208 |
| | $Mp_2$($\times 10^3$ g/mol) | 1222 | 900 | 478 |
| | Coupling number | 6.4 | 5.1 | 2.3 |

As shown in Table 1 above, it was confirmed that Examples 3 and 4 had a significant increase in weight average molecular weight and a significant increase in coupling number compared to the comparative example. Through this, it was confirmed that the compound represented by Chemical Formula 1 according to the present invention was applied as a modifier for modifying a polymer, thereby providing a plurality of coupling sites to increase the coupling rate between chains constituting the polymer, while simultaneously being introduced into the chain and modifying the chain structure to highly modify the polymer.

## Claims

**1.** A compound represented by Chemical Formula 1 below:

[Chemical Formula 1]

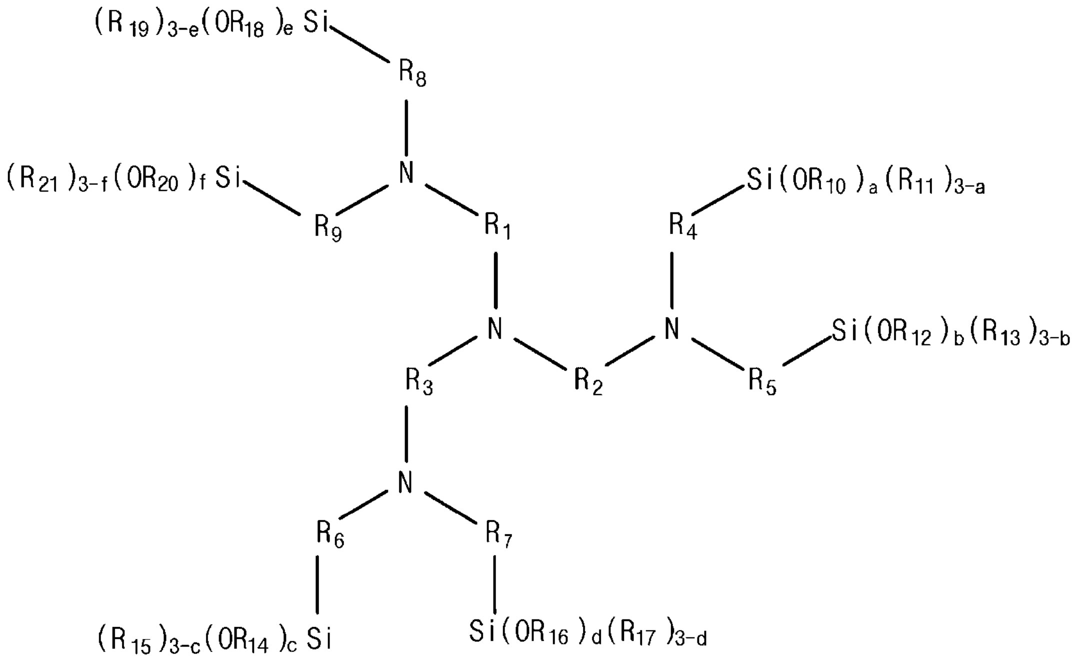

wherein:

$R_1$ to $R_9$ are each independently an alkylene group having 1 to 20 carbon atoms,
$R_{10}$ to $R_{21}$ are each independently an alkyl group having 1 to 20 carbon atoms, and
a, b, c, d, e, and f are each independently an integer selected from 1 to 3.

**2.** The compound according to claim 1, wherein in Chemical Formula 1 above, $R_1$ to $R_9$ are each independently an alkylene group having 1 to 10 carbon atoms, $R_{10}$ to $R_{21}$ are each independently an alkyl group having 1 to 10 carbon atoms, and a, b, c, d, e, and f are each independently an integer selected from 1 to 3.

**3.** The compound according to claim 1, wherein in Chemical Formula 1 above, $R_1$ to $R_9$ are each independently an alkylene group having 1 to 6 carbon atoms, $R_{10}$ to $R_{21}$ are each independently an alkyl group having 1 to 6 carbon atoms, and a, b, c, d, e, and f are each independently an integer selected from 1 to 3.

**4.** The compound according to claim 1, wherein the compound represented by Chemical Formula 1 is a compound represented by Chemical Formulae 1-1 or Chemical Formulae 1-2 below:

[Chemical Formula 1-1]

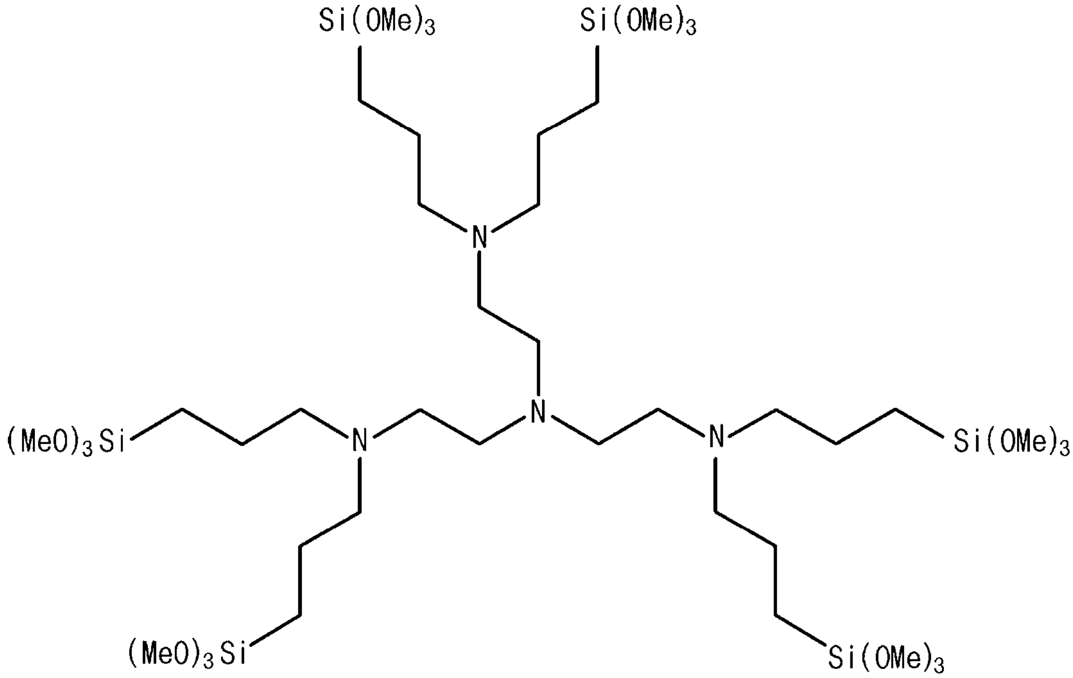

[Chemical Formula 1-2]

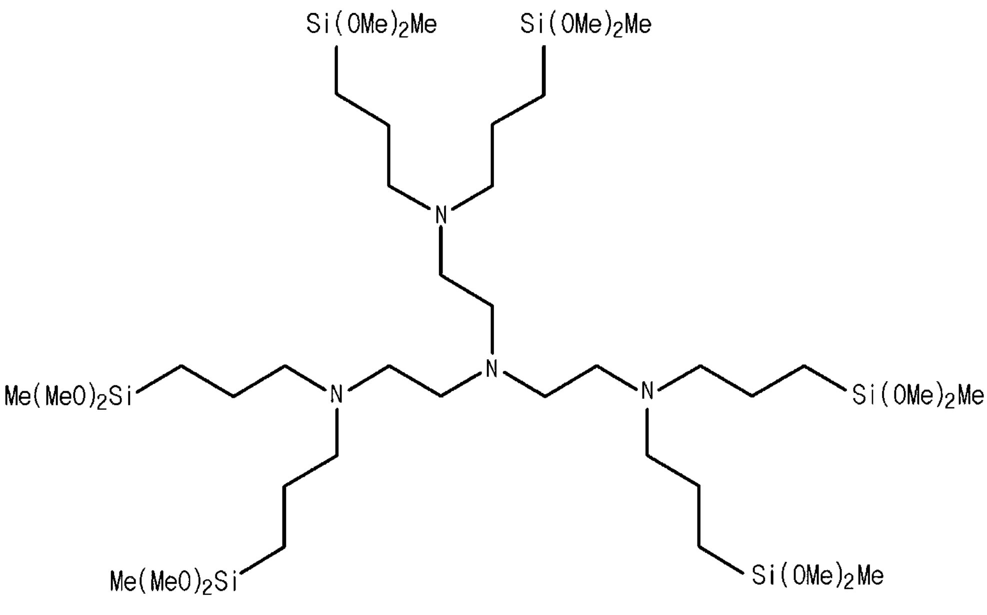

wherein Me is a methyl group.

**5.** The compound according to claim 1, wherein the compound is a modifier for modifying rubber.

**6.** The compound according to claim 1, wherein the compound is a modifier for modifying a polymer comprising a repeating unit derived from a conjugated diene-based monomer.

**7.** A method for producing a compound represented by Chemical Formula 1, the method including a step of reacting a compound represented by Chemical Formula 2 below with a compound represented by Chemical Formula 3 below:

[Chemical Formula 2]

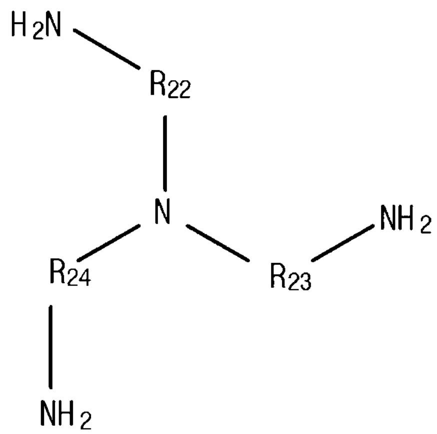

wherein:

$R_{22}$ to $R_{24}$ are each independently an alkylene group having 1 to 20 carbon atoms,

[Chemical Formula 3]

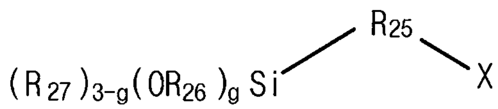

wherein:

$R_{25}$ is an alkylene group having 1 to 20 carbon atoms,
$R_{26}$ and $R_{27}$ are each independently an alkyl group having 1 to 20 carbon atoms,
X is a halogen element, and
g is an integer selected from 1 to 3,

[Chemical Formula 1]

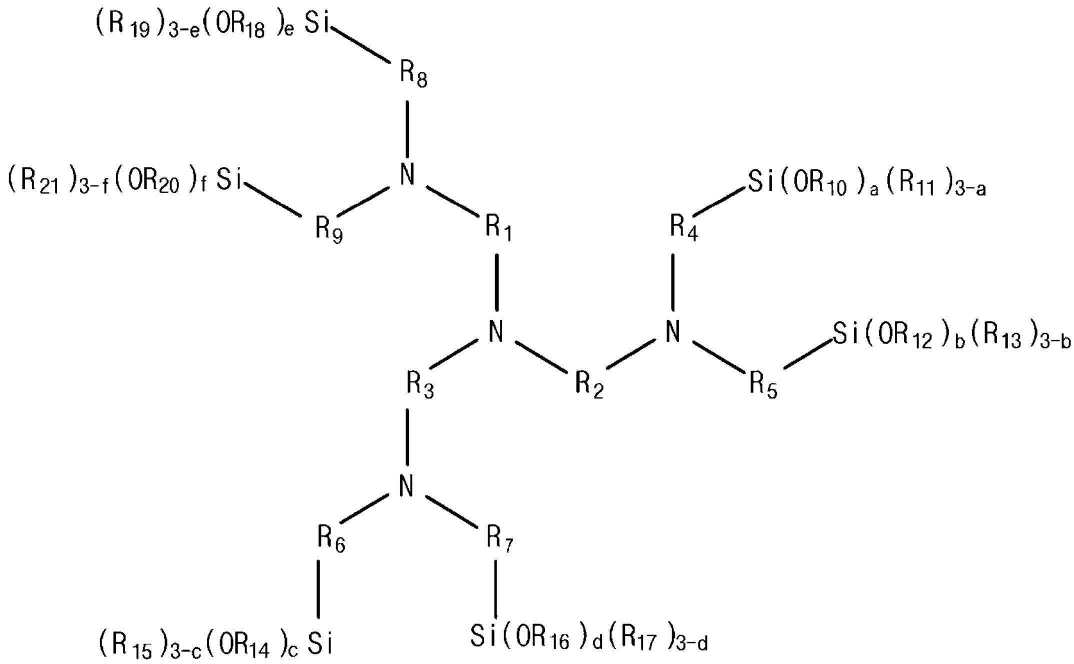

wherein:

$R_1$ to $R_9$ are each independently an alkylene group having 1 to 20 carbon atoms,
$R_{10}$ to $R_{21}$ are each independently an alkyl group having 1 to 20 carbon atoms, and
a, b, c, d, e, and f are each independently an integer selected from 1 to 3.

**8.** The method for producing the compound according to claim 7, wherein in Chemical Formula 1 above, $R_1$ to $R_9$ are each independently an alkylene group having 1 to 10 carbon atoms, $R_{10}$ to $R_{21}$ are each independently an alkyl group having 1 to 10 carbon atoms, and a, b, c, d, e, and f are each independently an integer selected from 1 to 3.

**9.** The method for producing the compound according to claim 7, wherein in Chemical Formula 2 above, $R_{22}$ to $R_{24}$ are each independently an alkylene group having 1 to 10 carbon atoms.

**10.** The method for producing the compound according to claim 7, wherein in Chemical Formula 3 above, $R_{25}$ is an alkylene group having 1 to 10 carbon atoms, $R_{26}$ and $R_{27}$ are each independently an alkyl group having 1 to 10 carbon atoms, X is a halogen element, and g is an integer selected from 1 to 3.

**11.** The method for producing the compound according to claim 7, wherein the reaction is performed in a reaction solvent under basic conditions at a temperature of 60°C to 120°C.

**12.** The method for producing the compound according to claim 7, wherein the compound represented by Chemical Formula 2 above and the compound represented by Chemical Formula 3 above are reacted in a molar ratio of 1:6 to 8.

**INTERNATIONAL SEARCH REPORT**

International application No.
**PCT/KR2024/016484**

**A. CLASSIFICATION OF SUBJECT MATTER**

**C07F 7/18**(2006.01)i; **C08C 19/25**(2006.01)i; **C08C 19/22**(2006.01)i

According to International Patent Classification (IPC) or to both national classification and IPC

**B. FIELDS SEARCHED**

Minimum documentation searched (classification system followed by classification symbols)

C07F 7/18(2006.01); B60C 1/00(2006.01); C08C 19/22(2006.01); C08C 19/25(2006.01); C08F 8/30(2006.01); C08F 8/42(2006.01); C08J 5/08(2006.01); C08K 5/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 공액디엔계 단량체(conjugated diene based monomer), 중합체(polymer), 고무 변성제(rubber denaturant)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0087380 A (JSR CORPORATION) 01 August 2018 (2018-08-01)<br>See claims 1, 2 and 12; and paragraphs [0049] and [0051]. | 1-12 |
| A | EP 3835325 A1 (ASAHI KASEI KABUSHIKI KAISHA) 16 June 2021 (2021-06-16)<br>See claims 1, 2, 10, 12 and 13; and paragraphs [0135] and [0137]. | 1-12 |
| A | KR 10-2017-0106770 A (LG CHEM, LTD.) 22 September 2017 (2017-09-22)<br>See claims 1, 4, 5, 11 and 16; and paragraphs [0068]-[0072]. | 1-12 |
| A | JP 07-242771 A (SHIN ETSU CHEMICAL CO., LTD.) 19 September 1995 (1995-09-19)<br>See claims 1-3; and paragraphs [0018]-[0020]. | 1-12 |
| A | US 2001-0014453 A1 (MCGALL, G. et al.) 16 August 2001 (2001-08-16)<br>See claims 10, 12 and 15; and figures 2 and 6. | 1-12 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 January 2025** | **12 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/016484**

| Patent document cited in search report | Publication date (day/month/year) | Patent family member(s) | Publication date (day/month/year) |
|---|---|---|---|
| KR 10-2018-0087380 A | 01 August 2018 | BR 112018076588 A2 | 16 April 2019 |
| | | BR 112018076588 A8 | 17 January 2023 |
| | | CN 108473599 A | 31 August 2018 |
| | | CN 108473599 B | 15 September 2020 |
| | | EP 3476866 A1 | 01 May 2019 |
| | | EP 3476866 B1 | 05 January 2022 |
| | | HU E057974 T2 | 28 June 2022 |
| | | JP 6252716 B1 | 27 December 2017 |
| | | PL 3476866 T3 | 28 March 2022 |
| | | RU 2709338 C1 | 17 December 2019 |
| | | SG 11201811355 A | 30 January 2019 |
| | | TW 201809025 A | 16 March 2018 |
| | | TW I636997 B | 01 October 2018 |
| | | US 10894876 B2 | 19 January 2021 |
| | | US 2019-0194430 A1 | 27 June 2019 |
| | | WO 2017-221943 A1 | 28 December 2017 |
| EP 3835325 A1 | 16 June 2021 | CN 112979876 A | 18 June 2021 |
| | | CN 112979876 B | 08 September 2023 |
| | | EP 3835325 B1 | 12 June 2024 |
| | | EP 3845568 A2 | 07 July 2021 |
| | | EP 3845568 A3 | 27 October 2021 |
| | | JP 2021-120448 A | 19 August 2021 |
| | | JP 2021-152135 A | 30 September 2021 |
| | | JP 2021-155701 A | 07 October 2021 |
| | | JP 2021-155702 A | 07 October 2021 |
| | | JP 7595446 B2 | 06 December 2024 |
| | | JP 7597484 B2 | 10 December 2024 |
| | | KR 10-2021-0075015 A | 22 June 2021 |
| | | KR 10-2517642 B1 | 06 April 2023 |
| | | SG 10202012412 A | 29 July 2021 |
| | | US 11884760 B2 | 30 January 2024 |
| | | US 2021-0189039 A1 | 24 June 2021 |
| KR 10-2017-0106770 A | 22 September 2017 | KR 10-2037842 B1 | 30 October 2019 |
| JP 07-242771 A | 19 September 1995 | JP 3047725 B2 | 05 June 2000 |
| US 2001-0014453 A1 | 16 August 2001 | AU 6298599 A | 01 May 2000 |
| | | US 2001-0021506 A1 | 13 September 2001 |
| | | US 2001-0027187 A1 | 04 October 2001 |
| | | US 2003-0077650 A1 | 24 April 2003 |
| | | US 2004-0214019 A1 | 28 October 2004 |
| | | US 2004-0215031 A1 | 28 October 2004 |
| | | US 2004-0253460 A1 | 16 December 2004 |
| | | US 2005-0123775 A1 | 09 June 2005 |
| | | US 6262216 B1 | 17 July 2001 |
| | | US 6410675 B1 | 25 June 2002 |
| | | US 6410675 B2 | 25 June 2002 |
| | | US 6429275 B2 | 06 August 2002 |
| | | US 6486286 B1 | 26 November 2002 |
| | | US 6486287 B2 | 26 November 2002 |
| | | US 6743882 B2 | 01 June 2004 |
| | | US 7098286 B2 | 29 August 2006 |

Form PCT/ISA/210 (patent family annex) (July 2022)

**INTERNATIONAL SEARCH REPORT**
**Information on patent family members**

International application No.
**PCT/KR2024/016484**

| Patent document cited in search report | Publication date (day/month/year) | Patent family member(s) | Publication date (day/month/year) |
|---|---|---|---|
| | | US 7125947 B2 | 24 October 2006 |
| | | US 7129307 B2 | 31 October 2006 |
| | | US 7129308 B2 | 31 October 2006 |
| | | WO 00-21967 A1 | 20 April 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230161545
- KR 19940021564 A